Europäisches Patentamt

European Patent Office

Office européen des brevets

(11) Veröffentlichungsnummer: **0 503 369 A1**

## (12) EUROPÄISCHE PATENTANMELDUNG

(21) Anmeldenummer: **92103235.5**

(22) Anmeldetag: **26.02.92**

(51) Int. Cl.5: **F01N 7/18**, F16L 33/26

(30) Priorität: **09.03.91 DE 4107654**
**23.08.91 DE 4128005**

(43) Veröffentlichungstag der Anmeldung:
**16.09.92 Patentblatt 92/38**

(84) Benannte Vertragsstaaten:
**DE ES FR GB IT SE**

(71) Anmelder: **Witzenmann GmbH**
**Metallschlauch-Fabrik Pforzheim**
**Östliche Karl-Friedrich-Strasse 134**
**W-7530 Pforzheim(DE)**

(72) Erfinder: **Tubach, Hans**
**Federbachstrasse 13**
**W-7541 Straubenhardt 6(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach**
**4026**
**W-7500 Karlsruhe 1(DE)**

(54) **Verbindungselement für zwei Rohrenden einer Abgasanlage von Kraftfahrzeugen.**

(57) Es wird ein Verbindungselement für zwei Rohrenden (7) einer Abgasanlage von Kraftfahrzeugen
angegeben, wobei das Verbindungselement aus einem gewickelten Metallschlauch (1) besteht, dessen
beiden Enden zwischen je einer äußeren Hülse (2)
und einem inneren (3), hohlzylindrischen Teil eingefangen und mit diesen Teilen verschweißt sind (8).
Dabei ist vorgesehen, daß das innere Teil (3) als
Hülse ausgebildet und von im wesentlichen der gleichen axialen Länge der äußeren Hülse (2) ist, daß
das jeweilige Metallschlauchende zwischen den beiden Hülsen verpreßt ist, daß eine der Hülsen (2, 3)
mit einem radial sich erstreckenden und das Metallschlauchende im wesentlichen überdeckenden freistehenden Bund (5) ausgerüstet ist, und daß die so
gebildeten Enden des Verbindungselementes unter
gleichzeitiger Verschweißung von Metallschlauch (1)
und Hülsen (2, 3) mit den Rohrenden (7) verbunden
sind.

Fig. 2

EP 0 503 369 A1

Die Erfindung betrifft ein Verbindungselement für zwei im wesentlichen miteinander fluchtende Rohrenden einer Abgasanlage von Kraftfahrzeugen, wobei das Verbindungselement aus einem gewickelten Metallschlauch, insbesondere einem Agraff- oder gewellten Wickelschlauch besteht, dessen beiden Enden zwischen je einer äußeren Hülse und einem inneren, hohlzylindrischen Teil eingefangen und mit diesen Teilen verschweißt sind.

Bei derartigen bekannten Verbindungselementen ist das innere, hohlzylindrische Teil ein Rohrstück, dessen freies Ende als Anschweißende gegenüber den Rohrenden der Abgasanlage dient. Damit macht diese Bauform an jedem Ende des Verbindungselementes zwei über den Umfang gehende Schweißnähte erforderlich. Die eine Schweißnaht dient dazu, zunächst einmal die Metallschlauchenden festzulegen und sicher einzufangen, um neben der kraftschlüssigen Verbindung eine geringe Leckage des Metallschlauches zu garantieren. Denn beim Abschneiden bestimmter Längen des Metallschlauches für die Herstellung des Verbindungselementes entstehen an den Enden des Metallschlauches spitz zulaufende Enden des Bandes, aus dem der Metallschlauch gewickelt ist. Deren Verarbeitung innerhalb einer Schweißnaht erfordert besondere Maßnahmen und Fertigkeiten, die in der Regel nur beim Metallschlauchhersteller vorhanden sind.

Nach Herstellung des so entstandenen "Rohlings" geht dieser dann an den Anwender, der mit einer weiteren Schweißnaht die Verbindung zwischen dem durch das innere, hohlzylindrische Teil gebildeten Anschweißende und den Rohrenden der Abgasanlage herstellen muß.

Die vorbeschriebene Arbeitsweise ist ersichtlich aufwendig, aber bisher erforderlich, da das Verbindungselement bei dessen Hersteller soweit konfektioniert sein muß, daß den Qualitätsanforderungen Genüge getan wird und daß andererseits eine ohne weiteres transportfähige Einheit entsteht, damit dann der Anwender ein in sich fertiges Bauelement durch die Anbringung der weiteren Schweißnähte weiterverarbeiten kann.

Aufgabe der Erfindung ist es, ein Verbindungselement der eingangs genannten Art derart abzuändern bzw. weiter auszubilden, daß anschweißfähige Enden des Verbindungselementes entstehen, ohne daß beim ursprünglichen Herstellungsvorgang des Verbindungselementes eine Schweißnaht angebracht werden muß. Es soll also im Ergebnis eine der beiden erwähnten Schweißnähte erübrigt werden durch Zusammenfassung der Endverschweißung des Metallschlauches mit der Anschlußverschweißung zwischen Verbindungselement und den Rohrenden der Abgasanlage.

Diese Aufgabe ist erfindungsgemäß dadurch gelöst, daß das innere Teil eine Hülse von im wesentlichen der gleichen axialen Länge der äußeren Hülse ist, daß die Metallschlauchenden zwischen den Hülsen durch Aufweitung der inneren Hülse und/oder Durchmesserreduktion der äußeren Hülse eingepreßt sind, daß wenigstens eine der Hülsen mit einer radial nach außen bzw. nach innen ragenden, den radialen Abstand der Hülsen wenigstens teilweise überbrückenden und unmittelbar neben dem Schlauchende angeordneten freistehenden Bund versehen ist, und daß die so gebildeten Enden des Verbindungselementes unter gleichzeitiger Verschweißung von Metallschlauch und Hülsen mit den Rohrenden verbunden sind. Dabei ist es zweckmäßig, wenn der Bund den radialen Abstand der Hülsen möglichst weitgehend überdeckt. Außerdem kann es je nach Konstruktion sinnvoll sein, die innere Hülse in die Länge des Metallschlauches zu verlängern, um Stütz- und Gasleitungsfunktionen zu erfüllen.

Durch diese erfindungsgemäßen Maßnahmen sind herstellerseitig die Metallschlauchenden sicher gefaßt und auch stirnseitig gekapselt, so daß eine transportfähige Einheit entsteht, bei der auch die stirnseitigen, spitz auslaufenden Bandenden des Metallschlauches nicht aufspringen können. Dabei kann in vielen Fällen die innere Hülse aus gegenüber der äußeren Hülse wesentlich dünnwandigerem Material bestehen, wenn nur die Aufgabe der Aufrechterhaltung der Verpressung gewährleistet ist, wobei ein an der inneren Hülse angeformter Bund gleichzeitig der Versteifung der inneren Hülse dient.

Andererseits ist für die dann anwenderseitig durchzuführende Verschweißung mit den Rohrenden der Abgasanlage durch den radialen Bund der äußeren oder inneren Hülse so viel Material zur Verfügung gestellt, daß die auslaufenden Bandenden des Metallschlauches beim Verschweißen mit den Rohrenden nicht wegbrennen können, so daß eine ausreichende Lecksicherheit des Metallschlauches gewährleistet bleibt. Hier sind dann auch keine besonderen Maßnahmen und Fertigkeiten mehr für die Verschweißung zwischen Verbindungselement und Rohrenden erforderlich.

Zweckmäßig ist es, wenn der Bund eine radiale Einbiegung der äußeren Hülse bzw. eine radiale Aufbiegung der inneren Hülse ist.

Für den Anschluß des Verbindungselementes an den weiterführenden Rohrenden kann die Ausbildung einer Stumpfnaht vorgesehen werden. Vorteilhafter ist es jedoch, die Verbindungselemente ein Stück auf die Rohrenden aufzustecken, um dann die gemeinsame Verschweißung vorzunehmen. Hierfür ist es vorteilhaft, daß die jeweils innere Hülse einen axialen Anschlag gegenüber dem benachbarten Rohrende aufweist, wobei dieser Anschlag durch eine radiale Einziehung der inneren Hülse, durch aus der inneren Hülse nach innen ragende Nasen oder dergleichen gebildet sein kann. Ebenso kann der Anschlag eine nach radial außen ragende Erweiterung der inneren Hülse in Form eines Bundes sein und es kann sich an diesen Anschlag eine in das benachbarte Rohrende einsteckbare Verlängerung der inneren Hülse anschließen, um das Verbindungselement zu justieren. Schließlich ist es möglich, daß die Rohrenden eine radial nach außen gerichtete Sicke als Axialanschlag für die inneren Hülsen aufweisen. Durch all diese Maßnahmen ist eine Montagehilfe für die Verbindungselemente und deren sichere, maßgerechte Anordnung gewährleistet.

Insgesamt erbringt der Gegenstand der Erfindung neben der Einsparung einer Schweißnaht den Vorteil, daß ausgehend von einem bestimmten Einbauraum die wirksame Länge des Metallschlauches vergrößert werden kann, womit sich eine Erhöhung der Flexibilität des Verbindungselementes und für das Verbindungselement eine Entlastung des Metallschlauches hinsichtlich der von ihm aufzunehmenden Bewegungen ergibt.

Weitere Merkmale und Einzelheiten der Erfindung ergeben sich aus der nachfolgenden Beschreibung von Ausführungsformen, die in der Zeichnung dargestellt sind. In der Zeichnung zeigen:

Fig. 1 die ausschnittweise Axialschnittansicht eines Endes eines Verbindungselementes;

Fig. 2 den Axialschnitt einer Anschlußverbindung zwischen einem Verbindungselement gemäß Fig. 1 und einem Rohrende;

Fig. 3 eine abgeänderte Ausbildung des Gegenstandes gemäß Fig. 2 und;

Fig. 4 bis 9 verschiedene Varianten der Anschlußverbindung mit Anschlägen zwischen Verbindungselement und Rohrende.

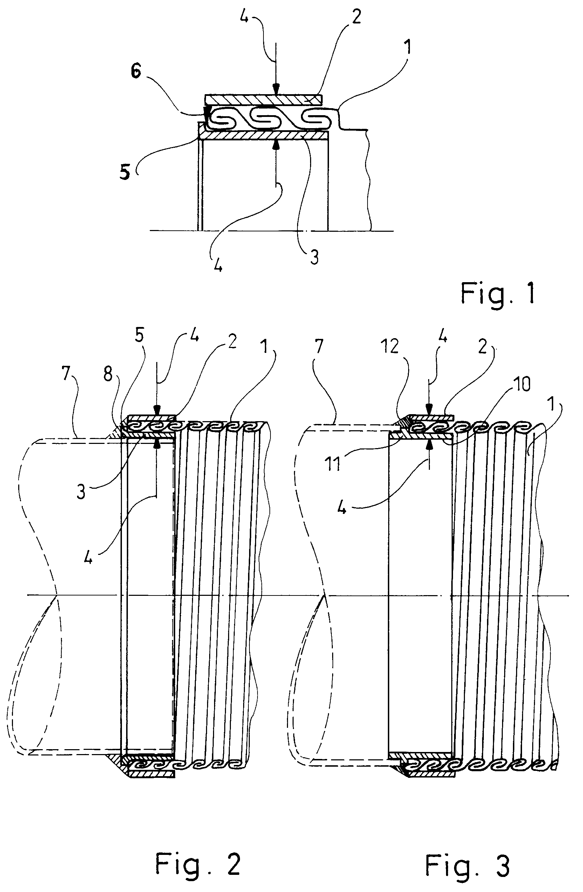

Wie aus Fig. 1 ersichtlich, ist ein Metallschlauch in Form eines Agraffschlauches 1 an seinem Ende zwischen einer äußeren Hülse 2 und einer inneren Hülse 3 gefaßt, wobei die drei genannten Teile durch Radialänderung der äußeren Hülse 2 bzw. der inneren Hülse 3 gemäß den Pfeilen 4 miteinander verpreßt sind.

Hier weist die innere Hülse 3 einen radial nach außen gehenden Bund 5 auf, der das axiale Ende des Agraffschlauches 1 überfängt, so daß der beim Abschneiden des Agraffschlauches 1 entstehende Metallbandzipfel 6 eingefangen ist und nicht nach außen vorspringen kann.

Auf diese Weise ist das Ende des ein Verbindungselement innerhalb einer Abgasleitung bildenden Agraffschlauches 1 fest umschlossen, so daß der Agraffschlauch, der natürlich an seinem anderen Ende in gleicher Weise mit einer inneren und äußeren Hülse versehen ist, eine transportfähige Einheit bildet, ohne daß eine Verschweißung zwischen den drei aus Fig. 1 ersichtlichen Teilen notwendig ist.

Beim Anwender findet dann eine Verschweißung des aus Fig. 1 ersichtlichen Verbindungselementes mit den Enden weiterführender Rohrleitungen 7 statt. Dazu werden die inneren Hülsen 3 auf das Ende des Rohres 7 aufgeschoben und es findet eine gemeinsame Verschweißung zwischen den Enden der Hülsen 2, 3, des Agraffschlauches 1 sowie der Außenwand des Rohres 7 statt. Die alles überdeckende Schweißnaht ist mit der Ziffer 8 versehen. Dabei ist ersichtlich, daß der Bund 5 neben seiner Funktion, das auslaufende Bandende des Agraffschlauches 1 zu fassen, gleichzeitig auch als Schweißmaterial zur Verfügung steht, um zu verhindern, daß das Ende des Agraffschlauches 1 bei der Durchführung der Schweißung weggebrannt wird.

Beim Gegenstand gemäß Fig. 2 ist die aus den Hülsen 2, 3 und dem Ende des Agraffschlauches 1 gebildete Einheit auf das weiterführende Rohr 7 aufgeschoben, wobei dann danach die gemeinsame Verschweißung 8 angebracht ist.

Der Gegenstand gemäß Fig. 3 unterscheidet sich dadurch vom vorgeschriebenen Gegenstand, daß die innere Hülse 10 als Drehteil oder sonstwie geformtes Teil ausgebildet ist, das einen radialen Bund 11 bildet, so daß die innere Hülse 10 in das Rohrende 7 eingesteckt und mit dem Bund 11 in Anschlag gegen die Stirnkante des Rohrendes 7 gebracht werden kann. Nunmehr kann eine stirnseitige Verschweißung mit Hilfe der Schweißnaht 12 erfolgen, wobei der Bund 11 als Schweißmaterial zwischen der Stirnkante des Rohres 7 und dem Ende des Agraffschlauches 1 zur Verfügung steht.

Fig. 3 hat ein Beispiel dafür gezeigt, wie ein aus Agraffschlauch 1, innerer und äußerer Hülse 2, 10, die untereinander gemäß den Pfeilen 4 verpreßt sind, in vorbestimmter Weise mit einem Rohrende 7 unter gegenseitiger Justierung verbunden werden können.

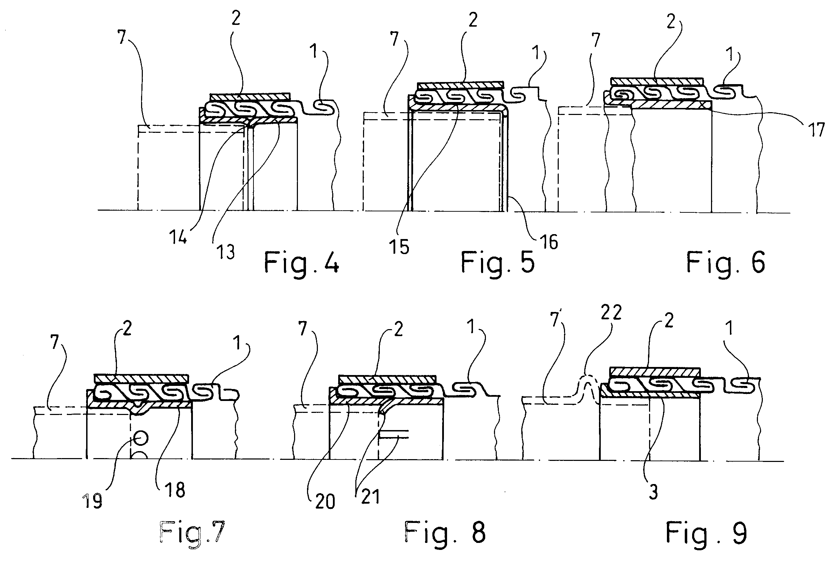

Die Fig. 4 bis 9 zeigen hierzu weitere Beispiele. So ist gemäß Fig. 4 eine innere Hülse 13 mit einer Innensicke 14 versehen, über die sie in Anschlag gegen das Ende des Rohres 7 gebracht werden kann.

Gemäß Fig. 5 hat die innere Hülse 15 an ihrem innerhalb des Agraffschlauches 1 liegenden Ende einen nach innen gehenden Bund 16 als Anschlag gegenüber dem Ende des Rohres 7.

Gemäß Fig. 6 hat die innere Hülse 17 eine Querschnittserweiterung ihres innerhalb des Agraffschlauches 1 liegenden Bereiches, die den Anschlag gegenüber dem Ende des Rohres 7 bildet.

Gemäß Fig. 7 ist die innere Hülse 18 mit nach innen gerichteten Noppen 19 als Anschlag gegenüber dem Ende des Rohres 7 versehen.

Gemäß Fig. 8 hat die innere Hülse 20 durch Ausprägen gebildete Nasen 21, die nach radial innen vorstehen und als Anschlag gegenüber dem Ende des Rohres 7 dienen.

Schließlich zeigt Fig. 9 eine Ausbildung des Endes des Rohres 7 mit Hilfe einer nach außen ragenden Sicke 22, die als Anschlag für die aufzuschiebende Innenhülse 3 dient.

Alle anhand der Fig. 3 bis 9 beschriebenen Maßnahmen dienen dazu, die Montage eines Verbindungselementes in Form eines Agraffschlauches mit endständig aufgepreßten Innen- und Außenhülsen zu erleichtern und exakt ausführen zu können, bevor dann die in den Fig. 4 bis 9 nicht mehr dargestellte, aber entsprechend den Fig. 2 und 3 ausgebildete Schweißnaht gegenüber den Rohrenden 7 ausgeführt wird.

Diese einzige Schweißnaht führt nun dazu, zwischen den Verbindungselementen und den Enden der Rohre 7 einen dichten Verbund herzustellen, wobei gleichzeitig in einem Arbeitsgang auch die Enden der Agraffschläuche 1 leckagefrei mit eingebunden werden, ohne daß die Gefahr besteht, daß das verhältnismäßig dünnwandige Material des Agraffschlauchbandes weggebrannt und damit Undichtigkeiten verursacht werden.

Insgesamt kann also ein Verbindungselement in Form eines Agraffschlauches 1 oder, was gleichermaßen möglich ist, in Form eines gewellten Wickelschlauches zusammen mit endständigen Hülsen 2, 3 ohne das Erfordernis einer Schweißnaht so vorgefertigt werden, daß beim späteren Einbau zwischen Rohren 7 eine gemeinsame, dichtende Verbindung möglich ist.

**Patentansprüche**

1. Verbindungselement für zwei im wesentlichen miteinander fluchtende Rohrenden einer Abgasanlage von Kraftfahrzeugen, wobei das Verbindungselement aus einem gewickelten Metallschlauch, insbesondere einem Agraff- oder gewellten Wickelschlauch besteht, dessen beiden Enden zwischen je einer äußeren Hülse und einem inneren, hohlzylindrischen Teil eingefangen und mit diesen Teilen verschweißt sind,
dadurch gekennzeichnet,
daß das innere Teil eine Hülse (3, 10, 13, 15, 17, 18, 20) von im wesentlichen der gleichen axialen Länge der äußeren Hülse (2) ist, daß die Metallschlauchenden zwischen den Hülsen durch Aufweitung der inneren Hülse und/ oder Durchmesserreduktion der äußeren Hülse eingepreßt sind, daß wenigstens eine der Hülsen mit einem radial nach außen bzw. nach innen ragenden, den radialen Abstand der Hülsen wenigstens teilweise überbrückenden und unmittelbar neben dem Schlauchende angeordneten freistehenden Bund (5, 11) versehen ist, und daß die so gebildeten Enden des Verbindungselementes unter gleichzeitiger Verschweißung von Metallschlauch und Hülsen mit den Rohrenden (7) verbunden sind.

2. Verbindungselement nach Anspruch 1,
dadurch gekennzeichnet,
daß der Bund eine radiale Einbiegung der äußeren Hülse (2) bzw. eine radiale Aufbiegung (5) der inneren Hülse (3) ist.

3. Verbindungselement nach Anspruch 1,
dadurch gekennzeichnet,
daß der Bund (11) eine Querschnittserweiterung der inneren Hülse (10) ist.

4. Verbindungselement nach einem der vorhergehenden Ansprüche,
dadurch gekennzeichnet,
daß die innere Hülse (10, 13, 15, 17, 18, 20) einen axialen Anschlag (11, 14, 16, 19, 21) gegenüber dem benachbarten Rohrende (7) aufweist.

5. Verbindungselement nach Anspruch 4,
dadurch gekennzeichnet,
daß der Anschlag durch eine radiale Einziehung (14, 16, 19) der inneren Hülse (13, 15, 18) gebildet ist.

6. Verbindungselement nach Anspruch 4,
dadurch gekennzeichnet,
daß der Anschlag durch wenigstens eine aus der inneren Hülse (20) ragende Nase (21) gebildet ist.

7. Verbindungselement nach Anspruch 4,
dadurch gekennzeichnet,
daß der Anschlag eine nach radial außen ragende Erweiterung der inneren Hülse (10) in Form eines Bundes (11) ist und daß sich an diesen Anschlag eine in das benachbarte Rohrende (7) einsteckbare Verlängerung der inneren Hülse anschließt.

8. Verbindungselement nach einem der Ansprüche 1 oder 2,
dadurch gekennzeichnet,
daß die Rohrenden (7) eine radial nach außen gerichtete Sicke (22) als Axialanschlag für die inneren Hülsen (3) aufweisen.

Fig. 1

Fig. 2

Fig. 3

Fig. 4

Fig. 5

Fig. 6

Fig.7

Fig. 8

Fig. 9

EP 0 503 369 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 202 481 (BOA A.G.) | 1,2 | F01N7/18 |
| A | * Zusammenfassung; Abbildung 1 * | 4 | F16L33/26 |
| | --- | | |
| Y | DE-U-8 802 758 (WITZENMANN) | 1,2 | |
| | * Seite 8, Absatz 3 - Seite 10, Absatz 1; Abbildungen * | | |
| | --- | | |
| A | DE-A-3 702 243 (WITZENMANN) | 1,8 | |
| | * Spalte 4, Zeile 62 - Spalte 5, Zeile 68; Abbildungen 1-3 * | | |
| | --- | | |
| A | EP-A-0 328 138 (HILLE & MÜLLER) | | |
| | --- | | |
| A | US-A-2 451 285 (HEATH) | | |
| | ----- | | |

RECHERCHIERTE SACHGEBIETE (Int. Cl.5)

F01N
F16L

Der vorliegende Recherchenbericht wurde für alle Patentansprüche erstellt

| Recherchenort | Abschlußdatum der Recherche | Prüfer |
|---|---|---|
| DEN HAAG | 14 MAI 1992 | SIDERIS MARIOS |